# EUROPEAN PATENT SPECIFICATION

(11) **EP 3 776 174 B1**
(45) Date of publication and mention of the grant of the patent: **08.10.2025**
(21) Application number: 19738209.6
(22) Date of filing: 09.01.2019
(51) Int. Cl.: G06F 3/16, G10L 15/20, G10L 21/16, G10L 25/78, G10L 21/0208

(54) **SYSTEM AND METHOD FOR GENERATING AN IMPROVED VOICE ASSIST ALGORITHM SIGNAL INPUT**
SYSTEM UND VERFAHREN ZUR ERZEUGUNG EINER VERBESSERTEN SIGNALEINGABE EINES SPRACHUNTERSTÜTZUNGSALGORITHMUS
SYSTÈME ET PROCÉDÉ PERMETTANT DE GÉNÉRER UN SIGNAL D'ENTRÉE PERFECTIONNÉ D'ALGORITHME D'ASSISTANCE VOCALE

(30) Priority: 09.01.2018 US 201862615079 P
(43) Date of publication of application: 17.02.2021
(73) Proprietor: Polk Audio, LLC, Carlsbad, CA 92008 (US)
(72) Inventor: DONNELLY, Daniel, Fallbrook, CA 92028 (US); SAYLOR, Robert, Lutherville, MD 21093 (US); SMITH, Garrett, Los Angeles, CA 90026 (US)
(74) Representative: Abel & Imray LLP
(86) International application number: PCT/US2019/012908
(87) International publication number: WO 2019/139991

(56) References cited:
- WO-A1-2016/186997
- US-A1- 2004 165 735
- US-A1- 2017 287 502
- US-B1- 8 971 543

## Description

### BACKGROUND OF THE INVENTION

### Reference to Prior Applications

This application claims priority to and benefit of US Provisional Application No. 62/615,079, filed January 9, 2018 by Daniel Donnelly, Robert Saylor, and Garrett Smith, and entitled "Method for Generating an Improved Voice Assist Algorithm Signal Input Which More Effectively Discerns Between VC Speaker Program Material Playback and Incoming Voice Commands,".

### Field of the Invention:

The present invention relates, in general, to Voice Controlled (VC) media playback systems or Smart Speakers adapted to receive and respond to a user's spoken commands, and more particularly to an improved Voice Control system and method for distinguishing user's spoken commands from program material.

### Discussion of the Prior Art:

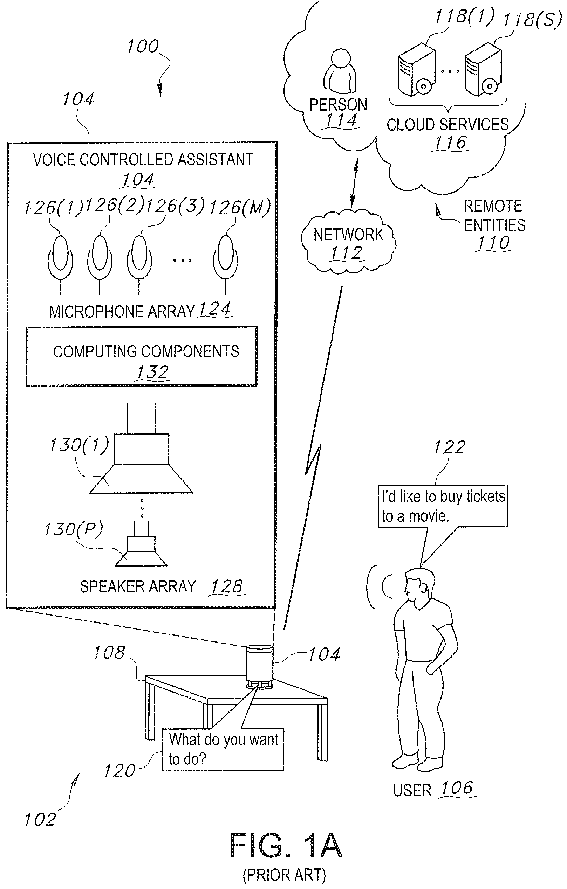

Voice control (VC) is a recent development in audio and smart home technology. It allows a user to speak voice commands that control an audio system as well as a variety of home appliances. This control is very desirable, and generally depends on the ability of a voice control system to understand the user (the person who issues voice commands or queries). Such systems (see, e.g., Figs. 1A-1D) generally incorporate an enclosure incorporating a set, or array, of voice control microphones that is normally integrated within the outer surface of the enclosure. Typically, the enclosure also incorporates a loudspeaker or loudspeaker array and suitable electronics so that the system can respond to spoken commands. However, mounting microphones on a loudspeaker enclosure creates a problem for the voice control system. While the speaker is playing music or other program material, the Voice Assistant ("VA") will have difficulty understanding voice commands from the user due to the proximity of the loudspeaker's radiating elements (transducers) to the microphones.

In order to address this issue, many voice control implementations include a reference signal path which produces an input path into the voice control system that is designated to receive the audio signal that is presently being reproduced by the loudspeaker array. This received loudspeaker audio signal is used as the reference input to a voice control algorithm in the VC system to process input signals received by the microphone array. This allows the voice control system to substantially remove from the microphones' input the signal being played by a loudspeaker. However, the usefulness of such a feature is challenged by dissimilarities between the program audio input signal received from a remote entity and supplied to be broadcast by the loudspeaker and the audio signal that is received by the microphone.

For example, music listeners listen to music over compact audio reproduction systems such as the applicant's I-Sonic^{®} music playback system (see, e.g., U.S. Patent No. 7,817,812) which enables the listeners to enjoy surprisingly high-fidelity playback in an easy to place, aesthetically pleasing product. Further, the widespread adoption of home Wi-Fi systems has led to a wide variety of "connected" audio products including voice controlled "Smart" speaker systems such as the Google Home^{™}, Amazon Echo^{™} or the Apple HomePod^{™} smart speaker systems. In such connected devices, Voice Controlled ("VC") or "smart" speakers incorporate microphones to pick up a user's voice commands, connect to the user's home Wi-Fi system and control the user's smart home gadgets. The VC speakers sold as Amazon Echo^{™} "voice-controlled assistants" are described and illustrated in US Patents Nos. 8,971,543 and 9,060,224 (issued to Rawles, LLC). This prior art is illustrated herein at Figs 1A-1C, which will be further described below, and which show the elements of exemplary (typical) Amazon Echo^{™} system architectures for purposes of establishing the background and the nomenclature of the present invention.

Some VC speaker systems (e.g., the Amazon Echo^{™}, Google Home^{™} or Cortana^{™} VC speaker systems) will run third party voice-based software ("chatbots") or assistant applications (e.g., Skills^{™} or Actions^{™}) and can respond to a user's spoken commands with synthesized audible responses generated as part of voice assistance operations. In such cases, a voice-controlled assistant ("VA") may sense or detect user-spoken trigger phrases (i.e., "wake" words or phrases) or commands, and generates an audible VA reply or acknowledgement in response. Amazon's VA or voice software system is known as "Alexa", Google's VA or voice software system is known as "Assistant" and Apple's VA or voice software system is known as "Siri", and each of these VA systems is programmable to respond to a user's "wake word" or response- triggering phrase, whereupon the VA operation takes over control of the VC loudspeaker and responds to the user with an audible response or reply.

VC loudspeaker systems necessarily reproduce several types of sound, or audio program material, including music, movie soundtracks, news, podcasts, etc., and issue Voice Assistance (VA) audible outputs to the user in response to detecting the user's voice control commands and queries. The reproduced, or playback sound, such as music (for example), may be significantly enhanced if the audio program signal is modified within the VC system by Digital Signal Processing ("DSP") parameters selected for optimal audio performance. It will be noted, however, that any sensed wake word or other user-spoken voice command or query could require an interruption in the audio program playback and in the generation of a VA response.

VC Loudspeaker systems depend on the ability of the voice assistant (VA) components of its control system to understand the voice of the user (the person who speaks voice commands or queries). As noted above, the set, or array, of voice control microphones is usually mounted upon and integrated within the outer surface of the loudspeaker enclosure and are arranged so that the system will respond to the commands it is given. Mounting the VC microphones on a loudspeaker enclosure creates a problem for the voice control system, for while the speaker is playing (or broadcasting) music or other program material, the VC system will have difficulty understanding the user because of the proximity of the loudspeaker's radiating elements (transducers) to the microphones. In order to address this issue, many voice control implementations include a reference signal path to provide input into the voice control system (see, e.g., Fig. 1D). This reference signal input is designated to receive the "acoustic echo" of an audio signal that is presently being reproduced when the loudspeaker is playing. This input audio signal is used as a reference to the voice control algorithm when processing the microphone input to allow the voice control system to remove the acoustic echo of the signal being played by the speaker from the microphone input. This Acoustic Echo Cancellation ("AEC") or subtraction is intended to leave only the user's voice commands. However, it has been found that such a typical signal cancellation does not always work well enough to enable the VC system to understand voice commands from the user, with the result that the voice assistant feature becomes unreliable.

As voice control technology becomes more ubiquitous it will become more important for the systems to become more robust. Thus, for example, as such systems become more useful, and even necessary, in consistently noisy environments such as restaurants, train stations and other locations where background noise can be characterized as cyclical and predictable, systems for improving response to voice commands will become more difficult.

There is a need, therefore, for a more effective method for generating a Voice Assist algorithm in the voice assistant components of a VC system in response to received audio signal inputs and environmental noise to effectively distinguish program material playback and other noise from incoming voice commands.

The prior art also includes WO 2016/186997 which relates to an acoustic echo cancelling system and method and also US 2017/01287502 which relates to a residual interference suppression system.

### Summary of the Invention

A purpose of the invention is to increase the responsiveness of a VC system to voice commands in consistently noisy environments by accurately quantifying and accounting for variations such as time and frequency effects in a voice control loop back or return audio reference signal path for a VC system.

Another purpose of the invention is to provide an improved system and method for generating a voice assistant input signal in a Voice-Controlled loudspeaker product.

Still another purpose of the disclosure is to supply a return audio reference signal path with an artificially generated signal that carries the characteristics of the noise in a specific location so that this noise can be removed from signals received by a microphone array to thereby enable the system to effectively separate background noise from speech. The system and method of the present invention generates a predictive feedforward correction transfer function to model the expected signal at the microphone array, and this feedforward correction signal is made available to a voice assist algorithm to better discern between system audio and incoming voice commands.

In applicants' development work, it was determined that the effectiveness and usefulness of typical AEC signal cancellation is significantly diminished by dissimilarities between (a) the audio input signal as played by the loudspeaker and (b) the audio signal received from the microphones. The resulting inaccuracies may be categorized into five groups. These are:
1. Time of arrival delay, which is the time taken for the acoustic signal from the loudspeaker to travel to the microphone array;
2. Spectral shading due to enclosure geometry. This includes frequency specific increase or reduction due to reflection and refraction from the physical speaker enclosure;
3. Resonances incurred by structure borne vibration and microphone enclosure geometry, including time based sympathetic resonances either intracabinet or within the air cavity of the microphone enclosure;
4. Non-ideal frequency response in the speaker and microphone, including unequal representation of all frequencies due to the properties of a specific microphone array or loudspeaker array; and
5. Persistent environment noise, from the environment in which a loudspeaker is located and cyclical or common sounds/drones that can be filtered out of the microphone response and make the speech more intelligible.

The present invention provides a method for generating a Voice Assistant engine input signal in a Voice-Controlled loudspeaker unit as set forth in claim 1, a method for determining the coefficients of a transfer function (H(ω,t)) for use in such a method, as set forth in claim 5, and a system for generating such a Voice Assistant engine input signal as set forth in claim 7.

Broadly speaking, the present invention is directed to an improved system and method for generating a voice assistant input signal in a Voice-Controlled loudspeaker product, the method including the steps of obtaining a desired transfer function *H(w,t)* for the physical configuration of a specific loudspeaker product, obtaining a loop back or return audio reference signal from the loudspeaker, and then modifying the return audio reference signal with the desired transfer function *H(w,t)* to provide a corrected return audio reference signal or enhanced feedforward cancellation signal which is then used to generate an enhanced and more intelligible voice assistant input signal. In one aspect of the invention the transfer function (TF) is calculated. In another aspect of the disclosure, the enhanced VC speaker system is programmed to generate the desired transfer function *H(w,t)* as a function of microphone array response to a real time playback stimulus signal that is modified or affected by the current existing configuration of the components and enclosure of the VC speaker system.

In accordance with a preferred form, the invention achieves its purposes through the following exemplary method steps. The VC system incorporates an internal Digital Signal Processor (DSP) which receives incoming program audio and after processing delivers the output program audio to an acoustic array or loudspeaker system. This output audio is also supplied from the DSP output stage into a parallel signal path which contains a finite impulse response filter (FIR) block which models the dissimilarities resulting from the inaccuracies. This parallel path is used to supply corrected return audio reference signal information and is made available to a voice control algorithm in the VC system which also receives audio information from the microphone array. The voice control algorithm generates the desired transfer function 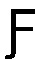 (ω,t) (from the return audio reference signal H(w,t)).

Coefficients for the FIR filter block may optionally be determined through two methods. A first method constructs the FIR filter at production time, i.e., before the voice-controlled loudspeaker system is sold. In another example of the disclosure the other method employs an on-board algorithm allowing the user to construct the FIR filter in-situ. When constructed at the time of manufacture the method of the present invention comprises:
1) Playing a swept sine stimulus or other stimulus, such as pseudo random pink noise or still other suitable stimuli, through the loudspeaker. The resulting microphone time signal is captured and band-limited in frequency to resolve the particular spectral region of interest and generate the return audio reference signal.
2) Deconvolving the measured return audio reference signal with the stimulus to obtain an impulse response which, in fact, is the desired transfer function H(ω,t).
3) Normalizing the impulse response coefficients and truncating the sequence with consideration given to allowable system latency and desired low frequency resolution.
4) Implementing the coefficients within the FIR block on the host DSP processor.

According to an example of this disclosure, when the filter is constructed in situ, after the VC system has been installed at the user location, the method comprises:
1) Initiating filter construction by the end-user by pressing a corresponding filter button on the product or sending commands from a controlling application.
2) Recalling a swept sine stimulus from system memory, playing it through the loudspeaker, capturing the resulting microphone time signal through the microphone array and storing it (as the return audio reference signal) in system memory.
3) Computing the following using an on-board processor:
   a. Band-limiting the mic array time signal in frequency. The preferred embodiment requires from 500-2khz to reflect the human voice, but it is not limited to this range.
   b. Deconvolving the measured signal with the stimulus to obtain an impulse response which, in fact, is the desired transfer function H(w,t).
   c. Normalizing the impulse response coefficients and truncating the sequence with consideration given to allowable system latency and desired low frequency resolution.
4) Implementing the coefficients implemented within the FIR block on the host DSP processor. This is achieved through a command write from the host processor to the DSP processor.
5) Optionally increasing the quality of the voice recognition by recording acoustic, ambient environmental noise when no signal is being reproduced by the loudspeaker system. Adding the ambient signal to the loop back channel to further separate the environmental noise from the user command words.

It is noted that the second method provides certain benefits to performance compared to the first method, since it provides an accurate model of the expected microphone array response due to the real acoustic environment encountered.

In cases where environmental noise is of particular concern, the method of the disclosure may include the following steps:
1. The microphone is programmed to listen to the environment for an amount of time necessary to create a predictive map.
2. The program creates a predictive map, or outline, of what type of noise to expect during the machine's active period (period where the VC system is turned on and in use). The active period can map different noise levels and types to different hours of the day.
3. Based on the predictive map, the system then generates artificial noise on the onboard processor or on an external computer. This noise can be completely artificial, or the recorded noise from a previous recording or some combination of both. Experimentation may be necessary to find the ideal mix.
4. Then the system continually feeds the generated noise and the speaker output into a return audio reference signal circuit to isolate and thereby enhance the user's voice commands to provide an enhanced Voice Assistant signal.
5. Occasionally the units may be reactivated to record more noise data to create a better representation of the acoustic space. Alternatively, this can be done if there is a change in noise that the operator can plan for, as when there is a predicable event such as increased traffic due to holidays.

In one embodiment of the invention, then, generating an enhanced voice assistant (VA) control signal in a voice-controlled loudspeaker product includes sensing or calculating a desired transfer function *H(w,t)* for the physical configuration of that specific loudspeaker product and then providing a return audio reference cancellation signal with the desired transfer function to provide an enhanced corrected return audio reference cancellation signal which is then used to generate an enhanced and more intelligible VA signal. The enhanced VC speaker system is programmed to generate the desired transfer function *H(w,t)* as a function of the return audio signal response of the system's microphone array to a playback stimulus signal as modified or affected by the configuration of the components and enclosure of the VC speaker system.

In an example of the disclosure the improved VC system and method may also include generating the desired transfer function *H(ω,t)* partly as a function of the return audio signal response of the microphone array to a playback stimulus signal as modified or affected by the ambient acoustic or room environment surrounding the VC speaker system. Alternatively, in an example of the disclosure the enhanced VC speaker system may be programmed to generate the desired transfer function *H(w,t)* as a function of sensed persistent environmental noise.

Stated another way, the invention is directed to an improved system and method for generating a voice assistant engine input signal in a voice-controlled specific loudspeaker unit and sensing or calculating a desired return audio reference signal transfer function *H(ω,t)* for the unit. The method further includes modifying the reference cancellation signal with the desired transfer function *H(w,t)* to provide an enhanced or corrected return audio reference or cancellation signal and applying the corrected return audio reference or cancellation signal to a voice signal to generate an enhanced and more intelligible VA engine input signal. The improved VC system and method further comprises determining the return audio reference signal transfer function H(ω,t) for the physical configuration of the loudspeaker unit.

The improved VC system and method preferably also includes determining the transfer function in response to a playback stimulus signal as modified or affected by the configuration of the components and enclosure of VC speaker system 404. In an example of this disclosure, another way to sense or calculate the desired loop back transfer function *H(w,t)* for the unit comprises determining the transfer function in response to a playback stimulus signal as modified or affected by the environment at the location of the unit. In an example of this disclosure, another way to sense or calculate a desired transfer function *H(w,t)* for the unit comprises determining the transfer function in response to a playback stimulus signal as modified or affected by the configuration of the components and enclosure of VC system and in response to repetitive or predicted environmental noise.

In an example of this disclosure, the system may be programmed to generate a desired transfer function *H(ω,t)* partly as a function of the response of the microphone array to a playback stimulus signal as it is modified or affected by ambient acoustic noise or by the room environment surrounding the VC speaker system. In an example of this disclosure, another way of sensing or calculating a desired return audio reference signal transfer function *H(w,t)* for the unit includes programming the enhanced VC speaker system to generate a desired transfer function *H(w,t)* as a function of sensed persistent environmental noise.

The improved system of the present invention for generating an enhanced voice assistant engine input signal in a voice-controlled loudspeaker unit preferably includes (a) a Voice-Controlled system having a loudspeaker array and a microphone array and connectable to remote entities, (b) computing components including an internal digital system processor (DSP) in the system to receive incoming audio including desired voice signals from the microphone array and to receive incoming program material from the remote entities, where the DSP has an output to deliver output program audio to said loudspeaker array. The DSP further includes a finite impulse response filter (FIR) block which models dissimilarities resulting from inaccuracies between the program audio delivered to the loudspeaker array and audio information received from the loudspeaker array by the microphone array to produce a return audio reference signal, and a voice-control processor including a voice control algorithm 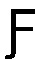 *(ω,t)* to receive the return audio reference signal and also to receive audio information from the microphone array to generate a desired function *H(ω,t)* to separate the filtered corrected return audio reference signal from the microphone array audio information to produce an enhanced desired voice signal. In the improved system, coefficients for the FIR are determined by construction of filter coefficients at production time, i.e., before the voice-controlled loudspeaker system is completed. In examples of the disclosure, the coefficients for the FIR alternatively be determined by an on-board algorithm allowing the user to construct the FIR filter in-situ.

### DESCRIPTION OF THE DRAWINGS

The following detailed description of the present invention is taken in conjunction with reference to the following drawings, wherein the same reference numbers in in the different Figures indicate similar or identical components:
Figs 1A-1C illustrate typical Voice-Control ("VC") speaker architectures, in accordance with the Prior Art; and
Fig. 1D is a diagram illustrating signal flows in typical Acoustic Echo Cancellation System ("AECS") implementations for the typical Voice-Control ("VC") speaker systems of Figs 1A-1C, in accordance with the Prior Art.
Figs 2-5 illustrate an improved VC loudspeaker system and method for generating an improved VA signal input which more effectively discerns between VC speaker program playback and incoming voice commands, in accordance with the present invention.

### DESCRIPTION OF PREFERRED EMBODIMENTS

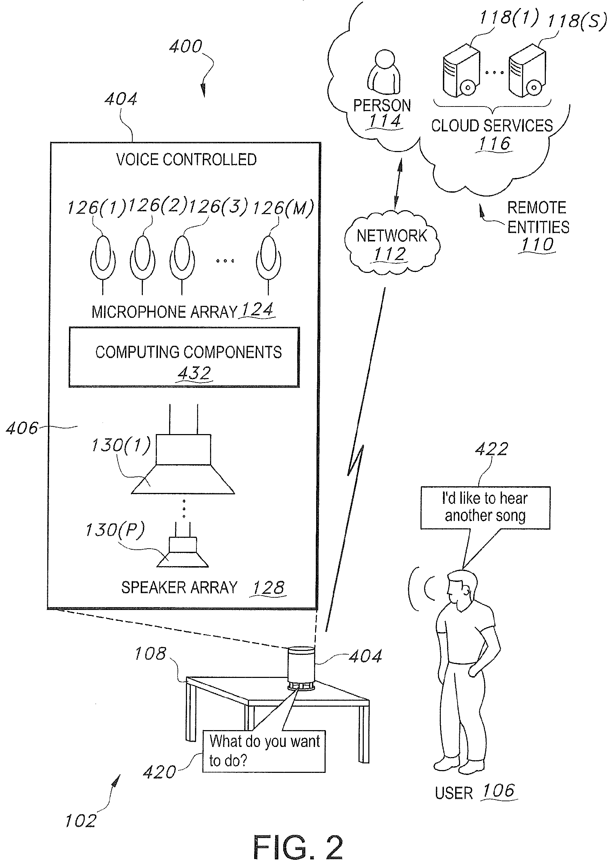

The following description and illustrations disclose specific, exemplary embodiments for an improved or enhanced smart or Voice-Controlled ("VC") loudspeaker system 400 incorporating a method for generating an improved Voice-Assist ("VA") signal input which allows more effective discernment between program playback on a VC system loudspeaker and incoming voice commands (e.g., from a user), in accordance with the present invention. As described above, a VC system must accurately sense a user's commands and queries even during ongoing program playback and in the presence of background noise. The present invention recognizes problems faced by designers of voice-controlled audio systems in accomplishing this and provides a method utilizing a system's digital system processor (DSP) to overcome the problems. VC system 400 is configured in the exemplary embodiments of Figs 2-5 as a compact wirelessly connected media (e.g., music) playback device or unit 404 to be placed on a table or shelf in a home or office. The applicant for the present invention has developed many loudspeaker and audio reproduction systems adapted for use with a users' Wi-Fi system and incorporating DSP elements programmable to achieve specific sonic goals for specific audio program playback applications. US Patents Nos. 9,277,044, 9,374,640, 9,584,935, 9,706,320 and 9,807,484 provide useful context and background for the present invention.

The improved VC loudspeaker system architecture of the present invention incorporates a DSP system and method (as illustrated in Figs 2-5, to be described below) for generating an improved voice assist (VA) signal input to a voice assist engine (e.g., to Amazon Alexa^{™} or Google^{™} Voice Assist engines) incorporating computing components including a microprocessor which pre-process sensed signals corresponding to user commands so that the VA engine can more effectively distinguish between the VC system program (e.g., music) playback and incoming voice commands (e.g., from the user). In an example of the disclosure, the DSP system may also be programmed to distinguish incoming voice commands from undesired persistent environmental background noise.

### VC System Architectures, Generally:

In order to place the present invention in its proper context, some voice-controlled system architecture nomenclature will be set forth with a few illustrative drawings. Referring now to prior art Fig. 1A, a typical VC loudspeaker system 100 is illustrated, which in this example may be a VC device such as those sold as Amazon Echo^{™} "voice-controlled assistants" and those described and illustrated in US Patents Nos. 8,971,543 and 9,060,224. Fig. 1A thus illustrates a first exemplary (typical) prior art system architecture, or unit 100 set in an exemplary VC loudspeaker use environment 102. The system includes a typical voice-controlled assistant 104, which may also be referred to herein as a VC loudspeaker system, or device, and the environment 102 indicates where the system and a first user 106 are located; the user 106 is typically near or proximal to VC speaker system 104 in the use environment 102. In this illustration, the VC loudspeaker system 104 is a selfcontained unit that can be physically positioned on a table 108 within the environment 102 and is shown sitting upright and supported on its first base or bottom end.

The VC loudspeaker system 104 is illustrated as being communicatively coupled to remote entities 110 over a network 112. The remote entities 110 may include individual people, such as person 114, or automated systems (not shown) typical of such VC systems that serve as far end talkers to verbally interact with the user 106. Additionally, or alternatively, the remote entities 110 may comprise cloud services 116 hosted, for example, on one or more servers 118(1) . . . 118(S). These servers 118(1)-(S) may be arranged in any number of ways, such as in server farms, stacks, and the like that are commonly used in data centers. The cloud services 116 generally refer to a network-accessible platform implemented as a computing infrastructure of processors, storage, software, data access, and so forth that is maintained and accessible via a network such as the Internet. Cloud services 116 do not require end-user knowledge of the physical location and configuration of the system that delivers the services. Common expressions associated with cloud services include "on-demand computing", "Software as a Service (SaaS)", "platform computing", "network accessible platform", and so forth.

The cloud services 116 may host any number of applications that can process user input received from the VC system 104 and produce a suitable response. Examples of typical applications might include web browsing, online shopping, banking, email, work tools, productivity, entertainment, educational, and so forth. In Fig. 1A, user 106 is shown communicating with the remote entities 110 via VC loudspeaker system 104. When activated, a Voice Assist (VA) program, or engine, incorporated in the VC loudspeaker system 104 provides through its loudspeakers an audible output question such as, "What do you want to do?" as represented by dialog bubble 120. This output may represent a question from a far end talker 114 or from a cloud service 116 (e.g., an entertainment service). The user 106 is shown replying to the question by stating, "I'd like to buy tickets to a movie" as represented by the dialog bubble 122.

The VC system, or unit 104 (which incorporates VA engine programming and circuitry, or voice assistant engine) is equipped with an array 124 of microphones 126(1), 126(2) . . . 126(M) to receive the voice input from the user 106 as well as any other audio sounds in the environment 102. The microphones 126(1)-(M) are generally arranged at a second or top end of the VC unit opposite the base end that is seated on the table 108. Although multiple microphones are illustrated, in some implementations the VC unit 104 may be embodied with only one microphone.

The VC unit 104 may further include a loudspeaker array 128 of speakers 130(1) . . . 130(P) to output sounds in humanly perceptible frequency ranges. The speakers 130(1)-(P) may be configured to emit sounds in various frequency ranges, so that each speaker has a different range. In this manner, the VC speaker system 104 may output high frequency signals, mid frequency signals, and low frequency signals. The speakers 130(1)-(P) are generally arranged at the first or base end of the VC loudspeaker unit 104 in the illustrated embodiment and are oriented to emit the sound in a downwardly direction toward the base end and opposite to the microphone array 124 in the top end and outwardly to be heard by the user.

The voice-controlled assistant or engine in the VC loudspeaker system 104 may include computing components 132 that process the voice input received by the microphone array 124, enable communication with the remote entities 110 over the network 112, and generate the audio to be output by the loudspeaker array 128. The computing components 132 are generally positioned within the unit 104 between the microphone array 123 and the speaker array 128, although essentially any other arrangement may be used. In the Fig. 1A architecture 100, the VC speaker system 104 may be configured to produce stereo or non-stereo output. The speakers 130(1) and 130(P) illustrated in this embodiment may receive a monoaural signal for output in a non-stereo configuration; alternatively, the computing components 132 may generate as an output to the speakers 130(1) and 130(P) two different channel signals for stereo output. In this stereo configuration, a first channel signal (e.g., left channel signal) is provided to one of the speakers, such as the larger speaker 130(1) and a second channel signal (e.g., right channel signal) is provided to the other of the speakers, such as the smaller speaker 130(P). Due to the vertically stacked arrangement of the speakers as illustrated in Fig. 1A, however, the twochannel stereo output may not be appreciated by the user 106.

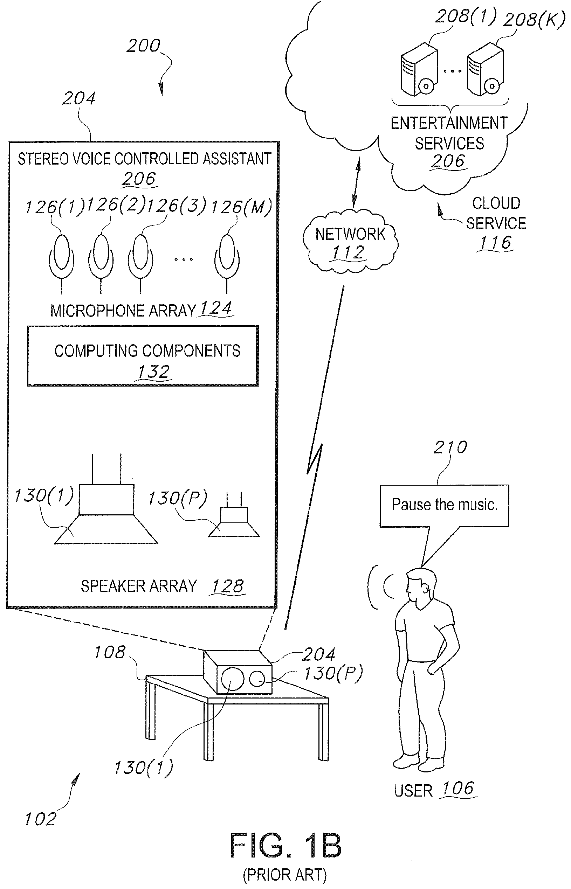

Fig. 1B illustrates at 200 another implementation of voice interactive, or voice-controlled computing architecture 200 which is similar to the architecture 100 of Fig. 1A, but in this illustration a voice-controlled assistant or VC unit 204 is utilized which has a different physical packaging layout that allows a laterally spaced arrangement of the speakers to better provide stereo output. Rather than the vertically stacked arrangement found in the assistant 104 of Fig 1A, the speakers 130(1) and 130(P) are shown in a horizontal configuration, at a laterally spaced distance from one another. The illustrated VC loudspeaker system or unit 204 is able to play full spectrum stereo using only two speakers of different sizes.

As illustrated *in* Fig 1B, the VC loudspeaker system 204 is communicatively coupled over the network 112 to a remote entity such as an entertainment service 206 that is part of the cloud services 116. The entertainment service 206 is hosted on one or more servers, such as servers 208(1) . . . 208(K), which may be arranged in any number of configurations, such as server farms, stacks, and the like that are commonly used in data centers. The entertainment service 206 may be configured to stream or otherwise download entertainment content, such as movies, music, audio books, and the like to the voice-controlled assistant. When audio content is involved, the voice-controlled assistant 204 can play the audio in stereo with full spectrum sound quality, even though the device has a small form factor and only two speakers. In this exemplary scenario, the user 106 is shown directing the VC speaker system 204 to pause the music being played by using the audible statement, "Pause the music" illustrated in dialog bubble 210. To support this scenario, the VC speaker system 204 is not only designed to play music in full spectrum stereo but is also configured with an acoustic echo cancellation (AEC) module to cancel audio program components being received at the microphone array 124 from the speaker array 128 so that the VC speaker system 204 can clearly hear the statements and commands spoken by the user 106.

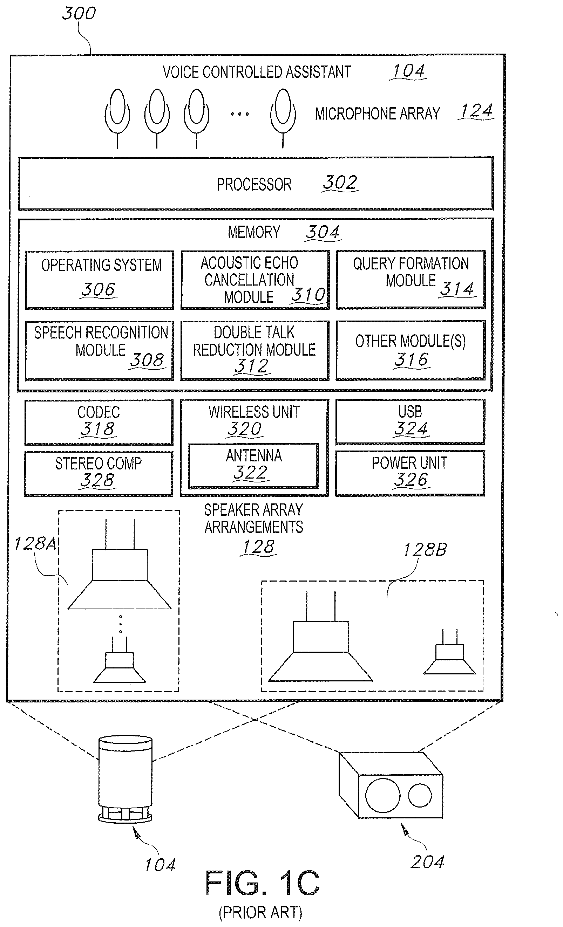

Fig. 1C illustrates at 300 selected functional components of the voice-controlled assistants or VC speaker systems 104 and 204 in more detail. Generally, each of the VC speaker systems 104 and 204 may be implemented as a standalone device that is relatively simple in terms of functional capabilities with limited input/output components, memory, and processing capabilities. For instance, the VC speaker systems 104 and 204 need not have a keyboard, keypad, or other form of mechanical input, nor do they need a display or touch screen to facilitate visual presentation and user touch input. Instead, the assistants 104 and 204 typically are implemented with the ability to receive and broadcast audio, include a network interface (wireless or wire-based), include a power supply, and include limited processing/memory capabilities.

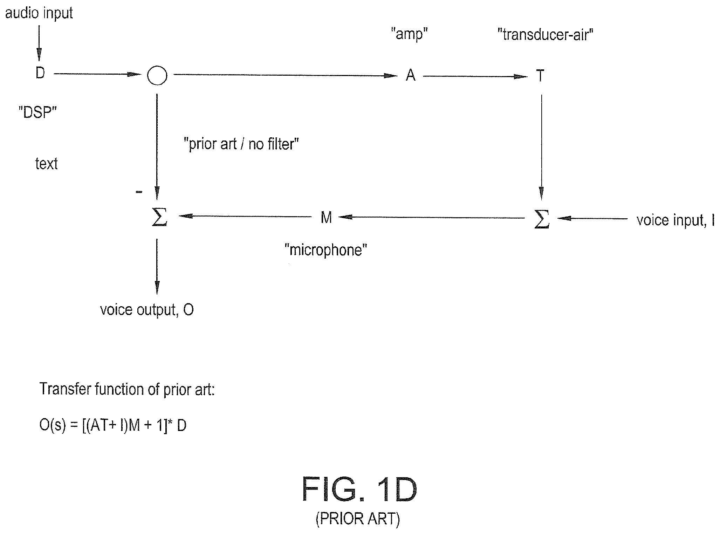

In the implementations illustrated in Figs 1A - 1C, each of the VC speaker systems 104 and 204 includes the microphone array 124, a speaker array 128 (Fig. 1) or array 128A and 128B (Fig. 1B), and as a part of their computing components 132 a processor 302 and a memory 304, as illustrated in the enlarged view 300 of Fig. 1C. The microphone array 124 is used to capture speech input from the user 106 as well as other sounds in the environment 102. The speaker array 128 is used to output (or broadcast) speech from a far end talker 114, audible responses provided by the cloud services 116, forms of entertainment 206 (e.g., music, audible books, etc.), or any other form of program sound. The speaker array 128 or the array 128A, 128B, produces a wide range of audio frequencies including both human perceptible frequencies and non-human perceptible frequencies. In one implementation, the speaker array 128 is formed of two speakers capable of outputting full spectrum stereo sound, as will be described below in more detail. Two speaker array arrangements are illustrated in Fig. 1C, including the vertically stacked arrangement 128A of Fig. 1A and the horizontally spaced arrangement 128B of Fig. 128B.

The memory 304 illustrated in Fig. 1C may include computer-readable storage media ("CRSM"), which may be any available physical media accessible by the processor 302 to execute instructions stored on the memory. In one basic implementation, CRSM may include random access memory ("RAM") and Flash memory. In other implementations, CRSM may include, but is not limited to, read-only memory ("ROM"), electrically erasable programmable read-only memory ("EEPROM"), or any other medium which can be used to store the desired information, and which can be accessed by the processor 302. Several modules such as instruction, data-stores, and so forth typically are stored within the memory 304 and configured to execute on the processor 302. An operating system module 306 is configured to manage hardware and services (e.g., wireless unit, USB, Codec) within and coupled to the units 104 and 204 for the benefit of other modules. Several other modules may be provided to process verbal input from the user 106. For instance, a speech recognition module 308 provides some level of speech recognition functionality. In some implementations, this functionality may be limited to specific commands that perform fundamental tasks like waking up the device, configuring the device, and the like. The amount of speech recognition capabilities provided on the VC speaker system illustrated at 104 and 204 is an implementation detail, but the architecture described herein can support having some speech recognition at the local VC speaker system 104/204 together with more expansive speech recognition at the cloud service 116.

An acoustic echo cancellation (AEC) module 310 and a double talk reduction module 312 are provided to process received audio signals to substantially cancel acoustic echoes and substantially reduce double talk that can occur (using, for example a signal processing method as illustrated in the signal flow diagram of Fig. 1D. These modules may work together to identify times where echoes are present, where double talk is likely, or where background noise is present, and attempt to reduce these external factors to isolate and focus on the "near talker" (i.e., user 106). By isolating the near talker sounds, better signal quality is provided to the speech recognition module 308 to enable more accurate interpretation of user speech utterances.

A query formation module 314 may also be provided to receive the parsed speech content output by the speech recognition module 308 and to form a search query or some form of request. This query formation module 314 may utilize natural language processing (NLP) tools as well as various language modules to enable accurate construction of queries based on the user's speech input. The modules shown stored in the memory 304 are merely representative. Other modules 316 for processing the user voice input, interpreting that input, and/or performing functions based on that input may be provided.

As further illustrated in Fig. 1C, the voice-controlled assistant 104/204 might further include a codec 318 to convert audio data between analog and digital formats; the codec may be coupled to the microphones of the microphone array 124 and the speakers of the speaker array 128 to encode and/or decode the audio signals. A user may interact with the assistant 104/204 by speaking to it, and the microphone array 124 receives the user speech. The codec 318 encodes the user speech and transfers that audio data to other components. The assistant 104/204 can communicate back to the user by emitting audible statements passed through the codec 318 and output through the speaker array 128. In this manner, the user interacts with the voice-controlled assistant simply through speech, without use of a keyboard or display common to other types of devices.

As also illustrated in Fig. 1C, the VC speaker system or voice-controlled assistant 104/204 includes a wireless unit 320 coupled to an antenna 322 to facilitate a wireless connection to a network. The wireless unit 320 may implement one or more of various wireless technologies, such as Wi-Fi, Bluetooth, RF, and so on. A USB port 324 may further be provided as part of the assistant 104/204 to facilitate a wired connection to a network, or a plug-in network device that communicates with other wireless networks. In addition to the USB port 324, or as an alternative thereto, other forms of wired connections may be employed, such as a broadband connection. A power unit 326 is further provided to distribute power to the various components on the assistant 104/204.

### The improved VC Speaker and Method of the Present Invention

Illustrated in Figs 2-5 is an exemplary enhanced voice controlled system architecture 400 set in a VC speaker use environment 102 and incorporating an improved VC loudspeaker system, or unit 404 utilizing a method of enhancing its performance in accordance with the present invention. As illustrated and described herein, user-command response performance of the VC speaker system 404 during program material playback is enhanced, in accordance with a first embodiment, by calculating the generation of adjustments to a voice assistance (VA) signal to provide an enhanced VA signal. This enhanced signal more effectively distinguishes between incoming Voice Command signals such as those received by microphone array 124 from a user 106, and program playback acoustic signals such as those that are generated, or broadcast, by a system speaker array 128 and also received by the microphone array.

As noted above, prior art VC speaker systems such as those illustrated at 100 and 200 have utilized acoustic echo cancellation ("AEC") systems such as those illustrated at module 310 in Fig 1C and the diagram of Fig. 1D. However, the effectiveness and usefulness of the signal cancellation of Fig. 1D is significantly diminished by dissimilarities between (a) the audio program input signal that is received at and played by the loudspeaker array 128 and (b) the audio program signal received from array 128 by the microphone array 124. These dissimilarities or (for acoustic echo cancellation purposes) inaccuracies were found to be significant in five areas, namely:
1) Time of arrival delay; that is, the time taken for the acoustic signal to travel from the loudspeaker array 128 to the microphone array 124;
2) Spectral shading due to the geometry of the loudspeaker enclosure generally indicated at 404, including frequency specific increases or reductions due to reflection and refraction from the physical speaker enclosure;
3) Resonances incurred by structure-borne vibration of the microphone enclosure geometry, including time-based sympathetic resonances either intracabinet or within the air cavity of the microphone array enclosure;
4) Non-ideal frequency response in the speakers and microphones, including unequal representation of all frequencies due to the properties of a specific microphone array or loudspeaker array; and
5) Persistent environment noise interference, such as where the environment 102 in which a loudspeaker is located has cyclical or common sounds that need to be filtered out of the microphone response to thereby make the user's speech more intelligible.

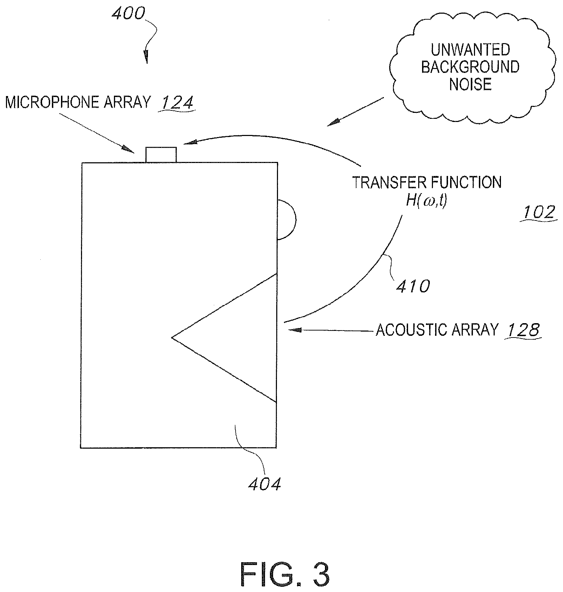

A purpose of one embodiment of the present invention is to accurately quantify and compensate for the foregoing time and frequency domain effects in a voice control return audio reference signal path 410, as diagrammatically illustrated in Fig. 3. The relationship between a signal generated by electronics in the system and the acoustic signal, or sound received by a microphone array 124 may be represented by a transfer function *H(ω,t),* and once this function is known, the electronics can be modified to cause a desired sound to be provided.

Referring now to Fig. 2, the improved VC loudspeaker system 400 is shown with a first user 106 typically near or proximal to enhanced VC loudspeaker unit 404. In this illustration, the enhanced VC speaker unit 404 includes an enclosure 406 that is physically positioned on table 108 within the environment 102 and is shown sitting upright and supported on its base end. The unit 404 is shown communicatively coupled to remote entities 110 over a network 112, and as previously described such remote entities 110 may include individual people, such as person 114, or automated systems (not shown) that serve as far end talkers to verbally interact with the user 106. The remote entities 110 may also comprise cloud services 116 hosted, for example, on one or more servers 118(1) . . . 118(S). These servers 118(1)-(S) may be arranged in any number of ways, as described above, and cloud services 116 generally refer to a network-accessible platform implemented as a computing infrastructure of processors, storage, software, data access, and so forth that is maintained and accessible via a network 112 such as the Internet. Cloud services 116 do not require end-user knowledge of the physical location and configuration of the system that delivers the services. The cloud services 116 may host any number of applications that can process the user input received from the enhanced VC speaker system 404 and produce a suitable response. Exemplary applications might include web browsing, online shopping, banking, email, work tools, productivity, entertainment, educational, and so forth, and user 106 communicates with the remote entities 110 via the enhanced VC speaker system 404.

As in the prior art systems described above, enhanced VC speaker system 404 incorporates a Voice Assist engine incorporated as a part of computing components 432 which responds to a user command to produce as an output an audible question such as, "What do you want to do?" as represented by dialog bubble 420. This output may represent a question from a far end talker 114, or from cloud service 116 (e.g., an entertainment service). In the illustration, the user 106 is shown replying to the question by stating, "I'd like to Hear another song" as represented by the dialog bubble 422. The array 124 of microphones 126(1) ... 126(M) which is a part of enhanced VC speaker system 404 is equipped to receive the voice input from the user 106 as well as any other audio sounds in the environment 102. The microphones 126(1)-(M) may be arranged at a top end of the enclosure 406 for the enhanced VC speaker system 404, the end opposite the base end seated on the table 108. Although multiple microphones are illustrated, in some implementations the enhanced VC speaker system 404 may include only one microphone.

The enhanced VC speaker system 404 may further include a speaker array 128 of speakers 130(1) . . . 130(P) located in the enclosure 406 and connected to the components 432 to output or broadcast sounds in humanly perceptible frequency ranges. The speakers 130(1)-(P), as described above, may be configured to emit sounds at selected frequency ranges, so that, for example, each speaker has a different range. In this manner, the enhanced VC speaker system 404 may output high frequency signals, mid frequency signals, and low frequency signals from selected loudspeakers. The speakers 130(1)-(P) are generally arranged within enhanced VC loudspeaker system 404 enclosure and oriented to emit the sound in a selected direction or directions.

In Fig. 2, the enhanced VC speaker system 404 may optionally be communicatively coupled over the network 112 to an entertainment service 206 such as that illustrated in Fig. 1B that is part of the cloud services 116. The entertainment service 206 is hosted on one or more servers, such as servers 208(1) . . . 208(K), which may be arranged in any number of configurations, as described above. The entertainment service 206 may be configured to stream or otherwise download entertainment content, such as movies, music, audio books, and the like to the enhanced VC speaker system 404. When audio content is involved, the enhanced VC speaker system 404 can play the audio in stereo or in a multi-channel home theatre (e.g., soundbar) mode with full spectrum sound quality. In this exemplary scenario, the user 106 is shown in Fig. 2 as directing the enhanced VC speaker system 404 to pause the music being played and to select another recording for playback, by using the audible statement, "I'd like to hear another song" as shown in dialog bubble 422. The enhanced VC speaker system 404 is not only designed to play music in full spectrum stereo but is also configured to clearly hear the statements and commands spoken by the user 106.

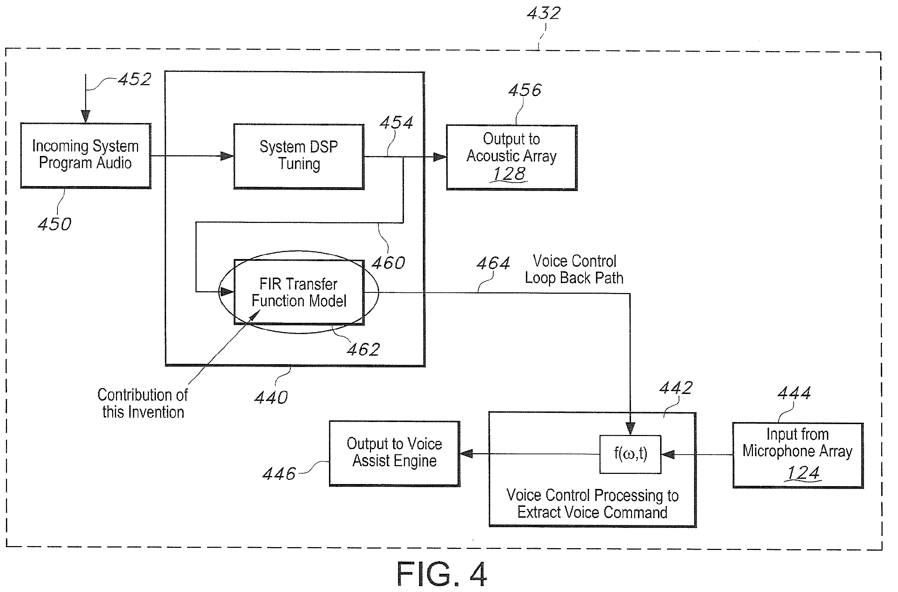

Referring now to Figs 3, 4 and 5, the improvement in voice control cancellation signal effectiveness and consequent enhanced performance of Voice Assistance (VA) audible outputs to the user in the VC speaker system 400 is achieved, in accordance with the present invention, by generating and using an improved VA engine input signal in the VC system. The computer components 432 (best seen in Figs. 2 and 4) of enhanced VC loudspeaker system 404 process the user's voice input, such as that illustrated at 422, as it is received by the microphone array 124. An internal digital signal processor (DSP) engine 440 (Fig. 4) applies a voice control algorithm 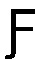 (ω,t) to a voice control processor 442 which modifies the signal received by the processor from the microphone array 128 via input 444 to generate an enhanced VA output signal at 446 to enable more intelligible voice communication with the remote entities 110 over the network 112, even during playback of audio from speaker array 128. The computing components 432 which include the DSP engine 440 are generally positioned within the speaker system 404 between the microphone array 124 and the speaker array 128, although essentially any other arrangement may be used. In the Fig. 2 architecture 400, the enhanced VC speaker system 404 may be configured to produce stereo or non-stereo (e.g., mono or multi-channel home theatre) output. Optionally, enhanced VC speaker system 404 has a physical packaging layout that allows a spaced arrangement of the speakers to better provide stereo or other multi-channel outputs with speakers 130(1)-(P) spaced from one another and is able to play full spectrum stereo using speakers of different sizes.

As illustrated in Figs. 2 and 4, the internal digital signal processing (DSP) unit or engine 440 in VC system 400 receives incoming program audio, as indicated at 450, via a link 452 from a suitable source such as network 112 or from a USB unit 324 or the like. The DSP processing unit 440 has an output stage 454 that is connected to an output link 456 leading to the acoustic array, or loudspeaker array, 128 to provide program material to array 128. The output stage 454 is also connected to a branch parallel signal path 460 through a finite impulse response (FIR) filter 462 to a voice control corrected return audio reference signal path 464. The FIR filter is constructed to model the dissimilarities described above, and the path 464 is used to make the program information, as modified by the filter, available to the voice control algorithm 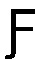 (ω,t) that is a part of the voice control processor 442. The input signals from the microphone array 128 that are made available via input 444 to the voice control algorithm in processor 442 to subtract the modified (i.e., corrected) program signal and to produce an enhanced voice output at 446 that is then supplied to the voice assist engine 446 which, in turn, is linked to the network 112.

Coefficients for the FIR filter 462 may be determined through two methods. In a first method the filter is constructed at the time of manufacture of the unit, before the voice-controlled loudspeaker system is sold. In an example of the disclosure a second method an on-board algorithm is provided to allow the user to construct the filter in-situ.

### Method 1 - At time of manufacture:

1) A swept sine stimulus or other stimulus audio program signal (such as pseudo random pink noise or still other suitable stimuli) is played through the loudspeaker array 128 of VC system 404 and is sensed in a loop back channel using microphone array 124. The resulting microphone time signal is captured (and may optionally be band-limited in frequency to resolve the particular spectral region of interest, which is the audible voice range of frequencies) in a Analog-Digital Converter ("ADC") channel memory (e.g., typically included in a microphone array assembly 124, when generating the output signal from block 444).
2) The captured microphone time signal, or measured signal, is deconvolved with the stimulus to obtain an impulse response which, in fact, is the desired transfer function *H(w,t),* for the VC system enclosure and is illustrated in the diagram of Fig. 3.
3) The coefficients of the impulse response in the ADC channel are normalized and the sequence truncated with consideration to allowable system latency and desired low frequency resolution.
4) The coefficients are finally implemented within the FIR block 462 on the host DSP processor 440. This preprogrammed filter based on the transfer function *H(w,t)* (e.g., similar to that illustrated in Fig. 3) accounts for the time of arrival delays, spectral shading, non-ideal frequency responses in the speakers, and microphone resonance inherent in the structure of the VC system 404 enclosure, speakers and microphones.

### Method 2 - In-situ:

1) The end-user (e.g., 106) initiates the process, as by a button press on the product (e.g., 404) or by commands sent from a controlling application.
2) A swept sine stimulus is recalled from system memory and played through the loudspeaker array 128. The resulting loop back acoustic time signal is captured through the microphone array 124 and stored in system memory.
3) The following are computed using an on-board processor 466:
   a. The microphone array time signal may optionally be band-limited in frequency, which in an exemplary embodiment would be from 500-2khz to reflect the human voice, but it is not necessarily limited to this range.
   b. The measured return audio reference signal is deconvolved with the stimulus to obtain an impulse response which, in fact, is the desired transfer function *H(ω,t).*
   c. The impulse response coefficients are normalized and the sequence truncated with consideration to allowable system latency and desired low frequency resolution.
4) The coefficients are finally implemented within the FIR block on the host DSP processor. This is achieved through a command write from the host processor to the DSP processor.
5) A further way to increase the quality of the voice recognition is to record or sample the acoustic, ambient environmental noise while no stimulus signal is being reproduced by the loudspeaker system. Then that sampled ambient signal can be used as an enhancement to the return audio reference signal to generate an ambient noise cancelling signal to be used in the VC engine to further separate the environment from the user command words (e.g., as described and illustrated in commonly owned US Patent 9767786.

It is noted that Method 2 provides certain benefits to performance compared to Method 1, for method 2 provides an accurate model of the expected microphone array response due to the real acoustic environment 102 encountered in the location of the VC device 404.

In cases where environmental noise is of particular concern, the method of the disclosure may also include the following steps with the VC system in a selected location:
1. Programming the microphone array 124 to listen to the environment for an amount of time necessary to create a predictive map of repetitive or consistent noise patterns.
2. Creating a predictive map, or outline, of what type of noise to expect during the machine's active period (period where the VC system is turned on and in use). The active period can map different noise levels and types to different hours of the day.
3. Based on the predictive map, generating artificial noise on the onboard processor or on an external computer. This noise can be completely artificial, can be the recorded noise from a previous recording, or can be some combination of both. Experimentation may be necessary to find the ideal mix.
4. Continually feeding the generated noise and the speaker program output into the system VC engine to isolate and thereby enhance the user's voice commands to provide an enhanced Voice Assistant signal.
5. Occasionally reactivating the units to record more noise data to create a better representation of the acoustic space. Alternatively, this can be done if there is a change in noise that the operator can plan for, as when there is a predicable event such as increased traffic due to holidays.

The method of the present invention described above thus generates a predictive transfer function *H(ω,t)* to model the expected signal at the microphone array 124. This signal is made available to the voice assist algorithm in the processor 432 to better discern between system program audio and incoming voice commands. The system and method of the present invention provides a more accurate voice control loop-back because both phase and amplitude are corrected, and the transfer function *H(w,t)* can be incorporated into existing DSP engine implementations.

In the system 400 and method of the present invention, as described here and illustrated in Figs. 2-5, the audio playback performance or sound quality of VC speaker system 404 may be affected not only by enclosure time and frequency domain effects and by environmental noise, but may also be affected by user settings intended to improve or alter audio playback such as music or dialogue/voice enhancement (or a "late night" listening mode). Thus, dedicated DSP settings may be modified and optimized for reproduction of various kinds of program material (e.g., movies, music, sports and news). Such alterations can also affect the system's response to voice commands but are compensated for by the use of the loop back compensation techniques described above.

In summary, an improved system and method for generating a VA engine input signal in a Voice-Controlled Loudspeaker Product 404 includes sensing or calculating a desired transfer function *H(w,t)* for that specific loudspeaker product's physical configuration and then modifying a return audio reference cancellation signal with the desired transfer function *H(ω,t)* to provide an enhanced or corrected return audio reference or cancellation signal which is then used to generate an enhanced and more intelligible VA engine input signal. In one embodiment, the enhanced VC speaker system 404 is programmed to generate the desired transfer function *H(w,t)* as a function of the response of the microphone array 124 to a playback stimulus signal as modified or affected by the configuration of the components and enclosure of VC speaker system 404. In another example of the disclosure, the improved VC system and method includes programming the system to generate the desired transfer function *H(ω,t)* partly as a function of the response of the microphone array 124 to a playback stimulus signal as modified or affected by the ambient acoustic or room environment surrounding VC speaker system 404. Additionally in an example of the disclosure, the enhanced VC speaker system 404 may be programmed to generate the desired transfer function *H(w,t)* as a function of sensed persistent environmental noise.

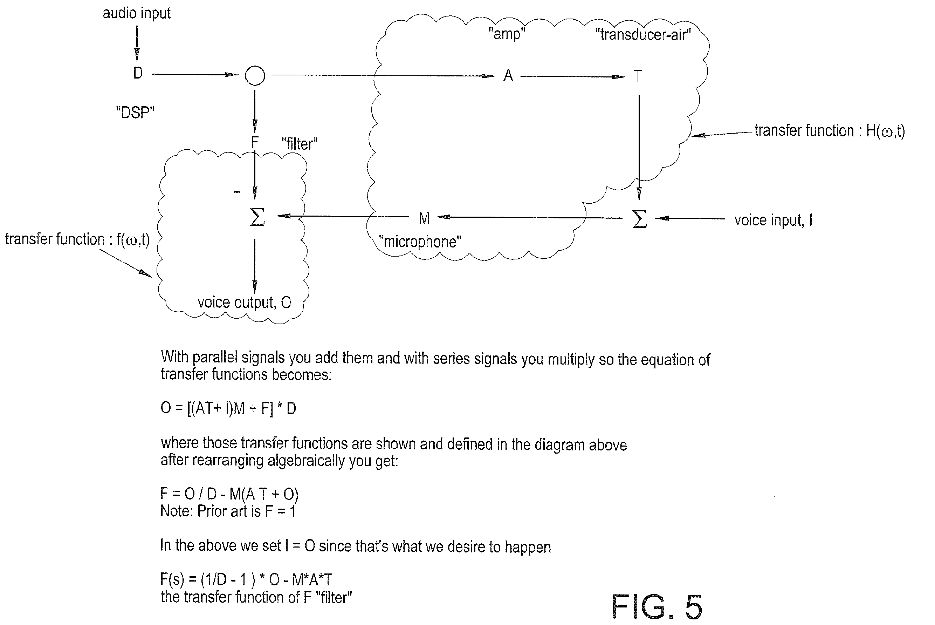

The system and method of the present invention includes the signal processing method illustrated in Fig. 5, which may be compared to the prior art AEC signal processing method illustrated in Fig. 1D. The return audio reference signal is used to generate the transfer function H(ω,t) (and see, e.g., Fig. 4) which is used to generate the corrected return audio reference or cancellation signal and then the enhanced and more reliably intelligible Voice Assist Algorithm Signal.

Having described preferred embodiments of a new and improved or enhanced VC speaker system 404 and VA input signal enhancement method, it is believed that other modifications, variations and changes will be suggested to those skilled in the art in view of the teachings set forth herein. It is therefore to be understood that all such variations, modifications and changes are believed to fall within the scope of the present invention.

## Claims

1. A method for generating a Voice Assistant engine input signal in a Voice-Controlled loudspeaker unit (404) including:
receiving a system audio signal for driving one or more loudspeakers of a specific Voice-Controlled loudspeaker unit,
passing the system audio signal to the one or more loudspeakers for audio reproduction and separately obtaining from the system audio signal a return audio reference signal for the specific loudspeaker unit (404);
modifying the return audio reference signal with a desired transfer function (*H*(*w,t*)) having coefficients determined at the time of manufacture of the unit to provide a corrected return audio reference or cancellation signal; and
applying the corrected return audio reference or cancellation signal to a voice signal to generate an enhanced and more intelligible VA engine input signal.

2. The method for generating a Voice Assistant engine input signal of claim 1, wherein calculating a desired transfer function *(H(ω,t))* for the unit comprises determining the transfer function for the physical configuration of the loudspeaker unit.

3. The method for generating a Voice Assistant engine input signal of any of claims 1 and 2, wherein calculating a desired transfer function *(H(ω,t))* for the unit comprises determining the transfer function in response to a playback stimulus signal as modified or affected by the configuration of the components and enclosure of VC speaker system (404).

4. The method for generating a Voice Assistant engine input signal of any of claims 1 to 3, wherein providing a corrected return audio reference or cancellation signal is done solely by digital signal processing of the return audio reference signal.

5. A method for determining the coefficients of the transfer function *(H(ω,t))* of any of claims 1 to 4 at the time of manufacture, the method comprising
playing a stimulus through the loudspeaker;
capturing the resulting microphone time signal and band-limiting it in frequency to resolve the particular spectral region of interest;
generating the return audio reference signal;
deconvolving the measured return audio reference signal with the stimulus to obtain an impulse response which is the desired transfer function (*H*(*ω,t*)); and
normalizing the impulse response coefficients and truncating the sequence with consideration given to allowable system latency and desired low frequency resolution.

6. The method for determining the coefficients of the transfer function *(H(ω,t))* at the time of manufacture, according to claim 5, wherein the method further comprises implementing the coefficients within a finite impulse response filter block on the host digital signal processing processor.

7. A system (400) for generating a Voice Assistant engine input signal in a Voice-Controlled loudspeaker unit (404) wherein the system is configured to:
receive a system audio signal for driving one or more loudspeakers of a specific Voice-Controlled loudspeaker unit,
pass the system audio signal to the one or more loudspeakers for audio reproduction and separately obtain from the system audio signal a return audio reference signal for the specific loudspeaker unit (404);
modify the return audio reference signal with a desired transfer function (*H*(*ω,t*)) having coefficients determined at the time of manufacture of the unit to provide a corrected return audio reference or cancellation signal; and
apply the corrected return audio reference or cancellation signal to a voice signal to generate an enhanced and more intelligible VA engine input signal.

8. The system (400) for generating a Voice Assistant engine input signal in a Voice Controlled loudspeaker unit according to claim 7, wherein
the system includes a loudspeaker array (128) and a microphone array (124) and the system is connectable to remote entities (110).

9. The system (400) for generating a Voice Assistant engine input signal in a Voice Controlled loudspeaker unit according to claim 7 or 8, wherein the system includes computing components (432) including an internal digital signal processor (440).

10. The system (400) for generating a Voice Assistant engine input signal in a Voice Controlled loudspeaker unit according to claim 9, wherein the digital signal processor is configured to receive incoming audio (444) including desired voice signals from a microphone array and to receive incoming program material 450 from remote entities.

11. The system (400) for generating a Voice Assistant engine input signal in a Voice Controlled loudspeaker unit according to claim 9 or 10, wherein the digital signal processor has an output (456) to deliver output program audio to a loudspeaker array.

12. The system (400) for generating a Voice Assistant engine input signal in a Voice Controlled loudspeaker unit according to any of claims 9 to 11, wherein the digital signal processor further includes a finite impulse response filter block (462) which applies a transfer function (*H*(*ω,t*)) to a return audio reference signal to produce a corrected return audio reference or cancellation signal.

13. The system (400) for generating a Voice Assistant engine input signal in a Voice Controlled loudspeaker unit according to any of claims 9 to 12, wherein the digital signal processor includes a voice-control processor (442) including a voice control algorithm (*f*(*ω,t*)) to receive the corrected return audio reference or cancellation signal and also to receive audio information from a microphone array to generate an enhanced desired voice signal.

14. The system (400) for generating a Voice Assistant engine input signal in a Voice Controlled loudspeaker unit according to claim 12 or 13, wherein coefficients for the finite impulse response filter block are determined by construction of filter coefficients at production time, i.e., before the voice-controlled loudspeaker system is completed.

15. A voice controlled loudspeaker unit including a system (400) according to any of claims 7 to 14.

## Patentansprüche

1. Verfahren zum Erzeugen eines Eingabesignals für eine Sprachunterstützungs-Engine in einer sprachgesteuerten Lautsprechereinheit (404), mit:
Empfangen eines Systemaudiosignals zum Ansteuern eines oder mehrerer Lautsprecher einer spezifischen sprachgesteuerten Lautsprechereinheit,
Weitergeben des Systemaudiosignals an die ein oder mehreren Lautsprecher für eine Audiowiedergabe und separat Erhalten, aus dem Systemaudiosignal, eines Rückgabeaudioreferenzsignals für die spezifische Lautsprechereinheit (404);
Modifizieren des Rückgabeaudioreferenzsignals mit einer gewünschten Transferfunktion (H(ω,t)) mit Koeffizienten, die zum Zeitpunkt einer Herstellung der Einheit festgelegt werden, zum Liefern eines korrigierten Rückgabeaudioreferenz- oder Unterdrückungssignals; und
Anwenden des korrigierten Rückgabeaudioreferenz- oder Unterdrückungssignals auf ein Sprachsignal zum Erzeugen eines verbesserten und noch verständlicheren Eingabesignals für eine VA-Engine.

2. Verfahren zum Erzeugen eines Eingabesignals für eine Sprachunterstützungs-Engine nach Anspruch 1, bei dem Berechnen einer gewünschten Transferfunktion (H(ω,t)) für die Einheit Bestimmen der Transferfunktion für die physische Konfiguration der Lautsprechereinheit aufweist.

3. Verfahren zum Erzeugen eines Eingabesignals für eine Sprachunterstützungs-Engine nach einem der Ansprüche 1 und 2, bei dem Berechnen einer gewünschten Transferfunktion (H(ω,t)) für die Einheit Bestimmen der Transferfunktion ansprechend auf ein Wiedergabeanregungssignal, das durch die Konfiguration der Komponenten und des Gehäuses des VC-Lautsprechersystems (404) modifiziert oder beeinflusst wird, aufweist.

4. Verfahren zum Erzeugen eines Eingabesignals für eine Sprachunterstützungs-Engine nach einem der Ansprüche 1 bis 3, bei dem Liefern eines korrigierten Rückgabeaudioreferenz- oder Unterdrückungssignals lediglich durch digitale Signalverarbeitung des Rückgabeaudioreferenzsignals erfolgt.

5. Verfahren zum Bestimmen der Koeffizienten der Transferfunktion (H(ω,t)) nach einem der Ansprüche 1 bis 4 zum Zeitpunkt einer Herstellung, mit
Abspielen einer Anregung durch den Lautsprecher;
Erfassen des resultierenden Mikrofonzeitsignals und Bandbreitenbegrenzen desselben im Frequenzbereich zum Auflösen der bestimmten Spektralregion von Interesse;
Erzeugen des Rückgabeaudioreferenzsignals;
Entfalten des gemessenen Rückgabeaudioreferenzsignals mit der Anregung zum Erhalten eines Impulsantwort, die die gewünschte Transferfunktion (H(ω,t)) ist; und
Normalisieren der Impulsantwortkoeffizienten und Abschneiden der Sequenz unter Berücksichtigung einer zulässigen Systemlatenz und einer gewünschten Niederfrequenzauflösung.

6. Verfahren zum Bestimmen der Koeffizienten der Transferfunktion (H(ω,t)) zum Zeitpunkt einer Herstellung nach Anspruch 5, bei dem das Verfahren ferner Implementieren der Koeffizienten in einem Endliche-Impulsantwort-Filterblock auf dem Host-Digitalsignalverarbeitungsprozessor aufweist.

7. System (400) zum Erzeugen eines Eingabesignals für eine Sprachunterstützungs-Engine in einer sprachgesteuerten Lautsprechereinheit (404), bei dem das System ausgebildet ist zum:
Empfangen eines Systemaudiosignals zum Ansteuern eines oder mehrerer Lautsprecher einer spezifischen sprachgesteuerten Lautsprechereinheit,
Weitergeben des Systemaudiosignals an die ein oder mehreren Lautsprecher für eine Audiowiedergabe und separat Erhalten, aus dem Systemaudiosignal, eines Rückgabeaudioreferenzsignals für die spezifische Lautsprechereinheit (404);
Modifizieren des Rückgabeaudioreferenzsignals mit einer gewünschten Transferfunktion (H(ω,t)) mit Koeffizienten, die zum Zeitpunkt einer Herstellung der Einheit festgelegt werden, zum Liefern eines korrigierten Rückgabeaudioreferenz- oder Unterdrückungssignals; und
Anwenden des korrigierten Rückgabeaudioreferenz- oder Unterdrückungssignals auf ein Sprachsignal zum Erzeugen eines verbesserten und noch verständlicheren Eingabesignals für eine VA-Engine.

8. System (400) zum Erzeugen eines Eingabesignals für eine Sprachunterstützungs-Engine in einer sprachgesteuerten Lautsprechereinheit nach Anspruch 7, bei dem
das System eine Lautsprecheranordnung (128) und eine Mikrofonanordnung (124) aufweist und das System mit entfernten Einheiten (110) verbunden werden kann.

9. System (400) zum Erzeugen eines Eingabesignals für eine Sprachunterstützungs-Engine in einer sprachgesteuerten Lautsprechereinheit nach Anspruch 7 oder 8, bei dem das System Rechenkomponenten (432) mit einem internen Digitalsignalprozessor (440) aufweist.

10. System (400) zum Erzeugen eines Eingabesignals für eine Sprachunterstützungs-Engine in einer sprachgesteuerten Lautsprechereinheit nach Anspruch 9, bei dem der Digitalsignalprozessor zum Empfangen von ankommendem Audio (444) mit gewünschten Sprachsignalen von einer Mikrofonanordnung und zum Empfangen von ankommendem Programmmaterial 450 von entfernten Einheiten ausgebildet ist.

11. System (400) zum Erzeugen eines Eingabesignals für eine Sprachunterstützungs-Engine in einer sprachgesteuerten Lautsprechereinheit nach Anspruch 9 oder 10, bei dem der Digitalsignalprozessor einen Ausgang (456) zum Liefern von Ausgangsprogrammaudio zu einer Lautsprecheranordnung aufweist.

12. System (400) zum Erzeugen eines Eingabesignals für eine Sprachunterstützungs-Engine in einer sprachgesteuerten Lautsprechereinheit nach einem der Ansprüche 9 bis 11, bei dem der Digitalsignalprozessor ferner einen Endliche-Impulsantwort-Filterblock (462) aufweist, der eine Transferfunktion (H(ω,t)) auf ein Rückgabeaudioreferenzsignal anwendet, so dass ein korrigiertes Rückgabeaudioreferenz- oder Unterdrückungssignal erzeugt wird.

13. System (400) zum Erzeugen eines Eingabesignals für eine Sprachunterstützungs-Engine in einer sprachgesteuerten Lautsprechereinheit nach einem der Ansprüche 9 bis 12, bei dem der Digitalsignalprozessor einen Sprachsteuerungsprozessor (442) mit einem Sprachsteuerungsalgorithmus (f(ω,t)) zum Empfangen des korrigierten Rückgabeaudioreferenz- oder Unterdrückungssignals und ferner zum Empfangen von Audioinformation von einer Mikrofonanordnung zum Erzeugen eines verbesserten gewünschten Sprachsignals aufweist.

14. System (400) zum Erzeugen eines Eingabesignals für eine Sprachunterstützungs-Engine in einer sprachgesteuerten Lautsprechereinheit nach Anspruch 12 oder 13, bei dem Koeffizienten für den Endliche-Impulsantwort-Filterblock durch Konstruktion von Filterkoeffizienten zu einer Herstellungszeit, d.h., vor einer Fertigstellung des sprachgesteuerten Lautsprechersystems, festgelegt werden.

15. Sprachgesteuerte Lautsprechereinheit mit einem System (400) nach einem der Ansprüche 7 bis 14.

## Revendications

1. Un procédé pour générer un signal d'entrée pour moteur d'Assistant Vocal dans une unité de haut-parleurs à Commande Vocale (404) incluant :
recevoir un signal audio système pour piloter un ou plusieurs haut-parleurs d'une unité de haut-parleurs à Commande Vocale spécifique,
passer le signal audio système à un ou plusieurs haut-parleurs pour reproduction audio et obtenir séparément à partir du signal audio système un signal de référence audio de retour pour l'unité de haut-parleurs spécifique (404) ;
modifier le signal audio de référence de retour avec une fonction de transfert souhaitée (*H*(*ω, t))* ayant des coefficients déterminés au moment de la fabrication de l'unité afin de fournir un signal de référence audio de retour corrigé ou d'annulation ; et
appliquer le signal de référence audio de retour corrigé ou d'annulation à un signal vocal pour générer un signal d'entrée pour moteur d'AV amélioré et plus intelligible.

2. Le procédé pour générer un signal d'entrée pour moteur d'Assistant Vocal de la revendication 1, où calculer une fonction de transfert souhaitée (*H*(*ω, t))* pour l'unité comprend déterminer la fonction de transfert pour la configuration physique de l'unité de haut-parleurs.

3. Le procédé pour générer un signal d'entrée pour moteur d'Assistant Vocal de l'une quelconque des revendications 1 et 2, où calculer une fonction de transfert souhaitée (*H*(*ω, t))* pour l'unité comprend déterminer la fonction de transfert en réponse à un signal de stimulus de lecture tel que modifié ou affecté par la configuration des composants et du boîtier du système de haut-parleurs CV (404).

4. Le procédé pour générer un signal d'entrée pour moteur d'Assistant Vocal de l'une quelconque des revendications 1 à 3, où fournir un signal de référence audio de retour corrigé ou d'annulation est fait uniquement par traitement numérique de signal sur le signal de référence audio de retour.

5. Un procédé pour déterminer les coefficients de la fonction de transfert (*H*(*ω, t))* de l'une quelconque des revendications 1 à 4 au moment de fabrication, le procédé comprenant :
lire un stimulus par le haut-parleur ;
capturer le signal temporel de microphone résultant et le limiter en fréquences afin de résoudre la région spectrale d'intérêt particulière ;
générer le signal de référence audio de retour ;
déconvoluer le signal de référence audio mesuré avec le stimulus afin d'obtenir une réponse impulsionnelle qui correspond à la fonction de transfert souhaitée (*H*(*ω, t))* ; et
normaliser les coefficients de réponse impulsionnelle et tronquer la séquence en tenant compte de la latence admissible du système et de la résolution en basses fréquences souhaitée.

6. Un procédé pour déterminer les coefficients de la fonction de transfert *(H(ω, t))* au moment de fabrication, selon la revendication 5, où le procédé comprend en outre d'implémenter les coefficients dans un bloc de filtre à réponse impulsionnelle finie sur le processeur de traitement numérique de signal hôte.

7. Un système (400) pour générer un signal d'entrée pour moteur d'Assistant Vocal dans une unité de haut-parleurs à Commande Vocale (404), où le système est configuré pour :
recevoir un signal audio système pour piloter un ou plusieurs haut-parleurs d'une unité de haut-parleurs à Commande Vocale spécifique,
passer le signal audio système à un ou plusieurs haut-parleurs pour reproduction audio et obtenir séparément à partir du signal audio système un signal de référence audio de retour pour l'unité de haut-parleurs spécifique (404) ;
modifier le signal audio de référence de retour avec une fonction de transfert souhaitée (*H*(*ω, t))* ayant des coefficients déterminés au moment de la fabrication de l'unité afin de fournir un signal de référence audio de retour corrigé ou d'annulation ; et
appliquer le signal de référence audio de retour corrigé ou d'annulation à un signal vocal pour générer un signal d'entrée pour moteur d'AV amélioré et plus intelligible.

8. Le système (400) pour générer un signal d'entrée pour moteur d'Assistant Vocal dans une unité de haut-parleurs à Commande Vocale selon la revendication 7, où le système inclut un réseau de haut-parleurs (128) et un réseau de microphones (124) et le système est connectable à des entités distantes (110).

9. Le système (400) pour générer un signal d'entrée pour moteur d'Assistant Vocal dans une unité de haut-parleurs à Commande Vocale selon la revendication 7 ou 8, où le système comprend des composants informatiques (432) incluant un processeur de signal numérique interne (440).

10. Le système (400) pour générer un signal d'entrée pour moteur d'Assistant Vocal dans une unité de haut-parleurs à Commande Vocale selon la revendication 9, où le processeur de signal numérique est configuré pour recevoir de l'audio entrant (444) incluant des signaux vocaux désirés d'un réseau de microphones et pour recevoir un matériel de programme entrant 450 depuis des entités distantes.

11. Le système (400) pour générer un signal d'entrée pour moteur d'Assistant Vocal dans une unité de haut-parleurs à Commande Vocale selon la revendication 9 ou 10, où le processeur de signal numérique a une sortie (456) pour délivrer de l'audio de programme sortant à un réseau de haut-parleurs.

12. Le système (400) pour générer un signal d'entrée pour moteur d'Assistant Vocal dans une unité de haut-parleurs à Commande Vocale selon l'une quelconque des revendications 9 à 11, où le processeur de signal numérique inclut en outre un bloc de filtre à réponse impulsionnelle finie (462) qui applique une fonction de transfert (*H*(*ω, t))* sur un signal de référence audio de retour pour produire un signal de référence audio de retour corrigé ou d'annulation.

13. Le système (400) pour générer un signal d'entrée pour moteur d'Assistant Vocal dans une unité de haut-parleurs à Commande Vocale selon l'une quelconque des revendications 9 à 12, où le processeur de signal numérique inclut un processeur de contrôle vocal (442) incluant un algorithme de contrôle vocal *(f(ω, t))* pour recevoir le signal de référence audio de retour ou d'annulation et aussi pour recevoir des informations audio d'un réseau de microphones afin de générer un signal vocal désiré amélioré.

14. Le système (400) pour générer un signal d'entrée pour moteur d'Assistant Vocal dans une unité de haut-parleurs à Commande Vocale selon la revendication 12 ou 13, où des coefficients pour le bloc de filtre à réponse impulsionnelle finie sont déterminées par construction de coefficients de filtre at un moment de production, i.e., avant que le système de haut-parleurs à commande vocale ne soit terminé.

15. Une unité de haut-parleurs à commande vocale incluant un système (400) selon l'une quelconque des revendications 7 à 14.
